# EUROPEAN PATENT APPLICATION

(11) **EP 4 825 899 A1**
(43) Date of publication of application: **21.10.2026**
(21) Application number: 25170431.8
(22) Date of filing: 14.04.2025
(51) Int. Cl.: C08J 9/00, B29C 44/00, C08J 9/10, C08K 5/09, C08K 5/23

(54) **CHEMICAL FOAMING BLEND AND METHOD OF MANUFACTURING FOAMED COMPONENT PRODUCT BY USING CHEMICAL FOAMING BLEND**

(71) Applicant: Feng Tay Enterprises Co., Ltd., Douliu City, Yunlin County 640111 (TW)
(72) Inventor: HUNG, Chi-Yuan, 704 Tainan City (TW); SHIH, Chun-Yi, 600031 Chiayi City (TW)
(74) Representative: van Dam, Vincent

(57) **Abstract**

A chemical foaming blend including a phase change material formed through a reaction includes a thermoplastic material, a phase change material, an ionomer, a foaming agent, and a crosslinking agent. The phase change material is a stearic acid formed through a reaction between a metallic stearate and an acid resin. The ionomer is formed through reacting the acid resin with the metallic stearate. A method of manufacturing a foamed component product by using the chemical foaming blend includes filling the chemical foaming blend into a mold and heating the chemical foaming blend for foaming and crosslinking to form a semi-finished foamed component product; and placing the semi-finished foamed component product in a setting environment for shrinking into a foamed component product. The method could reduce a time for cooling and shrinking the semi-finished foamed component product, and the foamed component product could have a low density and a light weight.

## Description

### BACKGROUND OF THE INVENTION

### Technical Field

The present invention relates generally to chemical foaming blend technology, and more particularly to a chemical foaming blend and a method of manufacturing a foamed component product by using the chemical foaming blend.

### Description of Related Art

Foamed component products, such as shoe bodies (including shoe midsole and shoe outsole), protective equipment, pads, are typically manufactured through chemical foaming. In a conventional process of manufacturing a chemically foamed component product, a melted foaming material is filled into a foaming mold for heating and foaming to form a semi-finished foamed component product. When the foaming mold is opened, the semi-finished foamed component product instantaneously expands and enlarges due to foaming and then gradually cools and shrinks. As a temperature of an external environment influences a size shrinkage of the semi-finished foamed component product, a significant size difference between the foamed component product and the semi-finished foamed component product might easily occur.

In the foaming process, in order to control a stability of the size shrinkage of semi-finished foamed component product, the semi-finished foamed component product is generally placed in an oven for cooling and shrinking after opening the foaming mold, thereby reducing the influence of ambient temperature on the semi-finished foamed component product. The oven is typically set for multi-stage temperature cooling. For example, a temperature condition is set as 70°C-60°C-50°C-45°C-45°C; a temperature is set at 70°C for cooling over a period of time and then is gradually lowered to 45°C for cooling; a total time for cooling and shrinking is set as 45 minutes. The multi-stage temperature control of the oven could slow down the size shrinkage of the semi-finished foamed component product.

However, the multi-stage temperature control of the oven would increase the power consumption, and a setting time of the semi-finished foamed component product depends on the multi-stage temperature control of the oven, so that the production efficiency could not be improved. Moreover, in the conventional chemically foamed component product, the physical properties of low density and light weight could not be achieved easily, and the physical strength of the chemically foamed component product could not be effectively enhanced. Therefore, how to improve the production efficiency of chemical foaming of the foamed component product and how to achieve a chemically foamed component product with a low density, are problems needed to be solved in the industry.

### BRIEF SUMMARY OF THE INVENTION

In view of the above, the primary objective of the present invention is to provide a chemical foaming blend including a phase change material formed through a reaction and a method of manufacturing a foamed component product by using the chemical foaming blend. The chemical foaming blend could effectively enhance a physical strength of the manufactured foamed component product, so that the foamed component product could have a low density and a light weight. The phase change material formed through the reaction could reduce a time for setting and cooling the foamed component product.

The present invention provides a chemical foaming blend including a phase change material formed through a reaction. The chemical foaming blend is configured to foam and manufacture a foamed component product. The foamed component product is configured to constitute a part of a sporting good. The chemical foaming blend includes a thermoplastic material, a phase change material, an ionomer, a foaming agent, and a crosslinking agent. The phase change material is mixed with the thermoplastic material. The phase change material is a stearic acid formed through a chemical reaction between a metallic stearate and an acid resin. The ionomer is mixed with the thermoplastic material. The ionomer is formed simultaneously through the same reaction between the acid resin and the metallic stearate, during which ionic bonds are formed between the acid resin's carboxyl groups and the metal ions. The foaming agent is mixed with the thermoplastic material, the phase change material, and the ionomer. The crosslinking agent is mixed with the thermoplastic material, the phase change material, and the ionomer. The foamed component product has a specific gravity ranging from 0.05 g/cm³ to 0.20 g/cm³ and a hardness (Shore C) ranging from 25 to 60.

The present invention further provides a method of manufacturing a foamed component product by using a chemical foaming blend including a phase change material formed through a reaction, including:
step S1: kneading a thermoplastic material, an acid resin, a metallic stearate, a foaming agent, and a crosslinking agent to form a chemical foaming blend, wherein the metallic stearate and the acid resin react to form a phase change material, which is a stearic acid; simultaneously, the acid resin and the metallic stearate react to form an ionomer, which is the acid resin having ionic bonds;
step S2: filling the chemical foaming blend into a mold and heating the chemical foaming blend for foaming and crosslinking to form a semi-finished foamed component product, wherein the phase change material stores a thermal energy while the chemical foaming blend is heated and foamed; and
step S3: opening the mold and removing the semi-finished foamed component product, and placing the semi-finished foamed component product in a setting environment, wherein a temperature of the setting environment is less than a transition temperature of the phase change material; the phase change material releases the stored thermal energy in the setting environment to shrink the semi-finished foamed component product into a foamed component product; the foamed component product is configured to constitute a part of a sporting good; the foamed component product has a specific gravity ranging from 0.05 g/cm³ to 0.20 g/cm³ and a hardness (Shore C) ranging from 25 to 60.

With the aforementioned design, the chemical foaming blend includes the phase change material formed through the reaction. The chemical foaming blend undergoes a chemical reaction between the acid resin and the metallic stearate, simultaneously producing the phase change material and the ionomer. The stearic acid in the foamed component product, formed through the reaction between the metallic stearate and the acid resin, serves as the phase change material. The phase change material helps maintain the temperature of the semi-finished foamed component product, so that the semi-finished foamed component product could be evenly shrunk after opening the mold, which reduces the setting and cooling time of the foamed component product. The ionomer could effectively enhance the physical strength of the foamed component product and make the foamed component product have a low density and a light weight.

Moreover, in the method of manufacturing the foamed component product by using the chemical foaming blend, when the chemical foaming blend is heated and foamed in the mold, the phase change material could store the thermal energy. The semi-finished foamed component product is placed in the setting environment after being removed from the mold. As the temperature of the setting environment is set to be lower than the transition temperature of the phase change material, the phase change material in the semi-finished foamed component product releases the stored thermal energy, so that a temperature of the semi-finished foamed component product could be maintained at a certain level. In this way, the semi-finished foamed component product could be evenly shrunk after opening the mold, thereby reducing the time for cooling and shrinking and improving the yield rate of the method.

### BRIEF DESCRIPTION OF THE SEVERAL VIEWS OF THE DRAWINGS

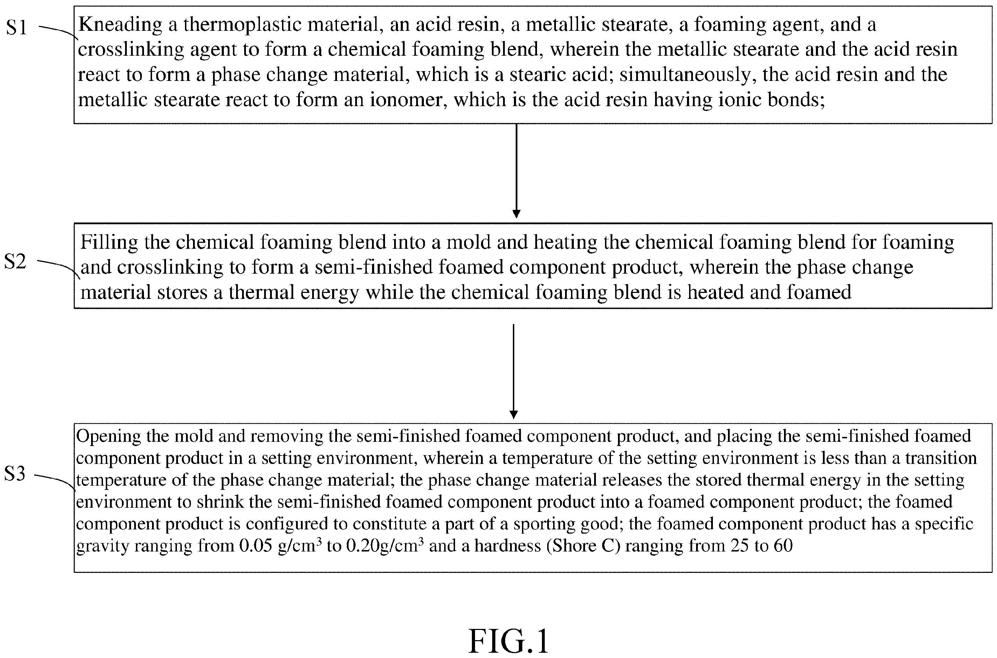

The present invention will be best understood by referring to the following detailed description of some illustrative embodiments in conjunction with the accompanying drawings, in which
FIG. 1 is a flowchart of the method of manufacturing the foamed component product by using the chemical foaming blend, which includes the phase change material formed through a reaction, according to an embodiment of the present invention.

### DETAILED DESCRIPTION OF THE INVENTION

The present invention provides a chemical foaming blend including a phase change material formed through a reaction. The chemical foaming blend is configured to foam and manufacture a foamed component product. The foamed component product is configured to constitute a part of a sporting good. The sporting good includes shoe bodies and protective equipment. The foamed component product includes a shoe midsole, a shoe outsole, a protective pad, a pad, and other foamed bodies. The foamed component product could be an energy-absorbing component of the sporting good. In the current embodiment, the foamed component product has a specific gravity ranging from 0.05 g/cm³ to 0.20 g/cm³ and a hardness (Shore C) ranging from 25 to 60. The chemical foaming blend basically includes a thermoplastic material, a phase change material, an ionomer, a foaming agent, and a crosslinking agent. The chemical foaming blend is formed by mixing the thermoplastic material, the phase change material, the ionomer, the foaming agent, and the crosslinking agent.

The thermoplastic material is selected from a group consisting of polyethylene (PE), ethylene-vinyl acetate copolymer (EVA), thermoplastic polyolefin elastomer (TPO), thermoplastic styrenic copolymer elastomer (TPS), thermoplastic polyurethane elastomer (TPU), thermoplastic polyester elastomer (TPEE), thermoplastic polyamide elastomer (TPA), synthetic rubber, natural rubber, and a combination thereof. In other words, the thermoplastic material could be any one of the aforementioned compounds, or a combination of two or more. In the current embodiment, the thermoplastic material, the phase change material, and the ionomer together form an ionomer mixture. A content of the thermoplastic material is quantified in terms of weight. The content of the thermoplastic material accounts for between 60wt% and 95wt% of a total content of the ionomer mixture. When the thermoplastic material includes two or more of the following ingredients: polyethylene (PE), ethylene-vinyl acetate copolymer (EVA), thermoplastic polyolefin elastomer (TPO), thermoplastic styrenic copolymer elastomer (TPS), thermoplastic polyurethane elastomer (TPU), thermoplastic polyester elastomer (TPEE), thermoplastic polyamide elastomer (TPA), synthetic rubber, natural rubber, a content of each of the ingredients of the thermoplastic material could be adjusted according to different performance requirements.

The phase change material (PCM) is mixed with the thermoplastic material. The phase change material is a stearic acid. The phase change material is formed through the reaction (i.e. neutralization) between a metallic stearate and an acid resin; the metal ions of the metallic stearate exchange with the carboxyl groups of the acid resin to form the stearic acid. A combined content of the ionomer and the phase change material is measured by weight. The combined content of the ionomer and the phase change material accounts for between 5wt% and 40wt% of the total content of the ionomer mixture. A weight ratio of the ionomer to the phase change material is between 67:33 and 98:2. During the reaction between the metallic stearate and the acid resin, the metal ions of the metallic stearate exchange with the carboxyl groups of the acid resin to form the stearic acid, so that a weight of the stearic acid formed through the reaction is decreased compared to a weight of the metallic stearate. The acid resin receives the metal ions of the metallic stearate to form the ionomer during the reaction, so that a weight of the ionomer formed through the reaction is increased compared to a weight of the acid resin.

It should be noted that the phase change material could absorb or release latent heat when the phase change material changes in physical phase at a particular temperature range. When the chemical foaming blend is heated at high temperature, the phase change material is changed from a solid phase to a melted phase to absorb heat and store a thermal energy. When the chemical foaming blend is cooled, the phase change material is solidified and releases the stored thermal energy, which can moderate the rate at which the temperature gradient of the semi-finished foamed component product decreases, thereby preventing the semi-finished foamed component product from ceasing to shrink prematurely due to a rapid temperature drop caused by a significant temperature difference between the semi-finished foamed component product and the ambient environment. In the current embodiment, a transition temperature of the phase change material ranges from 45°C to 130°C.

The ionomer and the thermoplastic material are mixed. The ionomer is formed through reacting (i.e. neutralizing) the acid resin with the metallic stearate. A part of carboxyl groups of the acid resin or a part of anhydride groups of the acid resin is reacted with metal ions of the metallic stearate, so that the acid resin generates ionic bonds to form the ionomer. The acid resin is selected from a group consisting of ethylene/methacrylic acid copolymer resin (EMAA), ethylene acrylic acid copolymer resin (EAA), polyacrylic acid (PAA), maleic anhydride grafted polymer, and a combination thereof. A content of the carboxyl groups of the acid resin or a content of the anhydride groups of the acid resin is less than 20wt%. In the current embodiment, the metallic stearate is selected from a group consisting of zinc stearate, magnesium stearate, sodium stearate, calcium stearate, lithium stearate, and a combination thereof. In other words, the metallic stearate could be any one of the aforementioned compounds, or a combination of two or more. Preferably, the metal ions of the metallic stearate are selected from a group consisting of alkali metals (IA) and alkaline earth metals (IIA), i.e., the metal ions of the metallic stearate are either alkali metals or alkaline earth metals. For example, the metallic stearate could be magnesium stearate, sodium stearate, calcium stearate, and lithium stearate. In the current embodiment, the thermoplastic material, the acid resin, and the metallic stearate constitute an acid resin mixture. The content of the thermoplastic material is quantified in terms of weight. The content of the thermoplastic material accounts for between 60wt% and 95wt% of a total content of the acid resin mixture. A combined content of the acid resin and the metallic stearate is quantified in terms of weight. The combined content of the acid resin and the metallic stearate accounts for between 5wt% and 40wt% of the total content of the acid resin mixture. A weight ratio of the acid resin to the metallic stearate is between 65:35 and 97:3. In other embodiments, a combined content of the thermoplastic material, the acid resin, and the metallic stearate is 100 phr; subsequently, the foaming agent and the crosslinking agent are added and mixed to form the chemical foaming blend; other additional agents, such as an anti-shrinking agent and zinc oxide, could be added separately.

The foaming agent is a chemical foaming agent. The foaming agent is evenly mixed with the thermoplastic material, the phase change material, and the ionomer. When the thermoplastic material, the phase change material, and the ionomer are processed at high temperature, the foaming agent is decomposed due to heat to release one gas or multiple gases, such as nitrogen or carbon dioxide. In this way, the thermoplastic material in a melted phase is expanded and foamed. An amount of the foaming agent added depends on a total content of the thermoplastic material, the phase change material, and the ionomer. The amount of the foaming agent added could be adjusted to meet different performance requirements. In the current embodiment, the foaming agent is added in an amount ranging from 2 phr to 25 phr, as long as the thermoplastic material could be evenly foamed. In one embodiment, the foaming agent could be azo foaming agent; in another embodiment, the foaming agent could be sodium bicarbonate, dinitrosopentamethylene-tetramine, sulfonyl hydroxides, azodicarbonamide, p-toluenesulfonyl semicarbazide, 5-phenyltetrazole, diisopropylhydrazodicarboxylate, or sodium borohydrite.

The crosslinking agent is mixed with the thermoplastic material, the phase change material, and the ionomer. An amount of the crosslinking agent added depends on the total content of the thermoplastic material, the phase change material, and the ionomer. The crosslinking agent is added in an amount ranging from 0.3 phr to 1.2 phr. The crosslinking agent is selected from a group consisting of 1,1'-bis-(tert-butyl-peroxy)-3,3,5 trimethylcyclohexane (TMCH), tert-butylperoxy 2-ethylhexyl carbonate (TBEC), 2,5-dimethyl-2,5-di(tert-butylperoxy) hexane (DBPH), di(tert-butylperoxyisopropyl)benzene (BIPB), benzoyl peroxide (BPO), dicumyl peroxide (DCP), and a combination thereof.

It should be noted that the unit "phr" (parts per hundred resin) throughout the specification, unless otherwise specified, is the amount (by weight) of an object added per 100 parts by weight of the total content of the thermoplastic material, the acid resin, and the metallic stearate. Alternatively, the unit "phr" is the amount (by weight) of the object added per 100 parts by weight of the total content of the thermoplastic material, the phase change material, and the ionomer.

In this way, the phase change material and the ionomer and of the chemical foaming blend are formed simultaneously through the reaction between the acid resin and the metallic stearate. The phase change material is formed by reacting the metallic stearate with the acid resin, so that the chemical foaming blend does not include an additional phase change material. Moreover, the chemical foaming blend includes the phase change material, so that a time for cooling and shrinking during the foaming process could be reduced, thereby reducing the energy consumption. The ionomer could enhance a physical strength of the foamed component product and provide a weight reduction to the foamed component product.

A method of manufacturing a foamed component product by using a chemical foaming blend, which includes a phase change material formed through a reaction, according to another embodiment of the present invention is illustrated in FIG. 1. The method includes using the type and the content of the thermoplastic material, the acid resin, the metallic stearate, the foaming agent, and the crosslinking agent of the chemical foaming blend of the aforementioned embodiment. The method of manufacturing the foamed component product by using the chemical foaming blend includes the following steps.

Step S1: kneading the thermoplastic material, the acid resin, the metallic stearate, the foaming agent, and the crosslinking agent to form the chemical foaming blend, wherein the metallic stearate is reacted with the acid resin to form the phase change material which is the stearic acid, and simultaneously, the acid resin is reacted with the metallic stearate to form the ionomer, which is the acid resin having ionic bonds. More specifically, in step S1, the thermoplastic material, the acid resin, the metallic stearate, the foaming agent, and the crosslinking agent are kneaded stepwise. First, the thermoplastic material is added to a kneader and is kneaded between 60°C and 85°C. Then, the metallic stearate is added to the kneader for kneading with the thermoplastic material, wherein the metallic stearate could be added to the kneader along with other additional agents, such as anti-shrinking agent and zinc oxide. Afterwards, the acid resin is added to the kneader for kneading for 10 minutes to 20 minutes. During the kneading process, a part of the carboxyl groups of the acid resin or a part of the anhydride groups is reacted (i.e. neutralized) with the metal ions of the metallic stearate to form the phase change material and the ionomer simultaneously. Then, the crosslinking agent and the foaming agent are added to the kneader for kneading, thereby obtaining the chemical foaming blend.

Step S2: filling the chemical foaming blend into a mold and heating the chemical foaming blend for foaming and crosslinking to form a semi-finished foamed component product. When the chemical foaming blend is filled into the mold, a heating temperature of the mold ranges from 160°C to 185°C, a heating time ranges from 6 to 18 minutes. The phase change material stores the thermal energy while the chemical foaming blend is heated and foamed. In an embodiment, the chemical foaming blend is melted at high temperature and high pressure to form a flowable state by using an injection foaming machine. The injection foaming machine injects the melted chemical foaming blend into the mold. The chemical foaming blend is heated in the mold for foaming and crosslinking. At that time, the foaming agent of the chemical foaming blend generates gas due to heat, so that the chemical foaming blend is expanded and foamed to form the semi-finished foamed component product.

Step S3: opening the mold and removing the semi-finished foamed component product, and placing the semi-finished foamed component product in a setting environment, wherein a temperature of the setting environment is less than a transition temperature of the phase change material. The phase change material releases the stored thermal energy in the setting environment, so that the semi-finished foamed component product is shrunk into a foamed component product. After being removed from the mold, the semi-finished foamed component product is placed in the setting environment for cooling and shrinking. A temperature of the setting environment is set to be between 30°C and 45°C and a time for cooling and shrinking is set to be between 15 minutes and 45 minutes for simulating fluctuations in room temperature due to weather variations. The temperature of the setting environment and the time for cooling and shrinking could be adjusted to meet different requirements of the semi-finished foamed component product. As the temperature of the setting environment is set less than the transition temperature of the phase change material, the phase change material in the semi-finished foamed component product releases the stored thermal energy, so that a certain degree of a temperature of the semi-finished foamed component product could be maintained. In this way, the semi-finished foamed component product could be evenly shrunk after opening the mold, so that the semi-finished foamed component product could steadily form the foamed component product in the setting environment. The foamed component product has a specific gravity ranging from 0.05 g/cm³ to 0.20 g/cm³ and a hardness (Shore C) ranging from 25 to 60.

In summary, the method of manufacturing the foamed component product by using the chemical foaming blend makes use of the chemical foaming blend of the aforementioned embodiment. In the method of manufacturing the foamed component product by using the chemical foaming blend, the chemical foaming blend is formed by kneading the thermoplastic material, the acid resin, the metallic stearate, the foaming agent, and the crosslinking agent. During kneading, a part of the carboxyl groups of the acid resin or a part of the anhydride groups of the acid resin is reacted (i.e. neutralized) with the metal ions of the metallic stearate to form the phase change material and the ionomer simultaneously. When the chemical foaming blend is heated and foamed in the mold, the phase change material could store the thermal energy. The semi-finished foamed component product is placed in the setting environment after being removed from the mold. As the temperature of the setting environment is set less than the transition temperature of the phase change material and the semi-finished foamed component product could steadily form the foamed component product at room temperature while placed at an indoor environment during the whole shrinkage process, the phase change material in the semi-finished foamed component product releases the stored thermal energy to maintain the certain degree of the temperature of the semi-finished foamed component product without additional temperature control on the temperature of the setting environment nor use of oven. In this way, the use of oven could be avoided and semi-finished foamed component product could be evenly shrunk after opening the mold, thereby reducing the time for cooling and shrinking and minimizing shrinkage defects to improve the overall yield rate of the foamed component product. Moreover, the ionomer could enhance the physical strength of the foamed component product and reduce the weight of the foamed component product.

In order to thoroughly illustrate the primary objective, features, and functions of the present invention, different chemical foaming blends in the following experimental groups make use of different acid resins and different metallic stearates to form a phase change material and an ionomer through reaction, the chemical foaming blends are used to manufacture a foamed shoe product, and mechanical properties of the foamed shoe product of each of the experimental groups are examined. It should be noted that the foamed shoe products of the experimental groups are used as an example, wherein the foamed shoe product could be a shoe midsole or a shoe outsole. However, the present invention is not limited to the foamed shoe product. In other embodiments, the foamed component product could also be a foamed protective equipment or a foamed pad.
1. Determine how different metallic stearates in different experimental groups correspond to mechanical properties of the foamed shoe products:
   (1) Prepare chemical foaming blends of a control group and experimental groups 1~5:
      Control group: the thermoplastic material, the acid resin, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 20 parts by weight of ethylene/methacrylic acid copolymer resin (EMAA). The foaming agent is 13.5 phr of an azo foaming agent. The crosslinking agent is 0.6 phr of a peroxide crosslinking agent. In the control group, an amount (phr) of the foaming agent added and an amount (phr) of the crosslinking agent added are additional parts by weight per 100 parts by weight of the total content of the thermoplastic material and the acid resin. When the chemical foaming blend is kneaded, 1 part by weight of the stearic acid is added.

The experimental group 1: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 17.3 parts by weight of ethylene/methacrylic acid copolymer resin (EMAA). The metallic stearate is 2.7 parts by weight of magnesium stearate (MgSt₂). The foaming agent is 12.6 phr of an azo foaming agent. The crosslinking agent is 0.5 phr of a peroxide crosslinking agent. The acid resin is reacted with the metallic stearate to form 2.57 parts by weight of the stearic acid.

The experimental group 2: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 17.3 parts by weight of ethylene/methacrylic acid copolymer resin (EMAA). The metallic stearate is 2.7 parts by weight of calcium stearate (CaSt₂). The foaming agent is 12.6 phr of an azo foaming agent. The crosslinking agent is 0.5 phr of a peroxide crosslinking agent. The acid resin is reacted with the metallic stearate to form 2.56 parts by weight of the stearic acid.

The experimental group 3: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 17.4 parts by weight of ethylene/methacrylic acid copolymer resin (EMAA). The metallic stearate is 2.6 parts by weight of lithium stearate (LiSt). The foaming agent is 11.6 phr of an azo foaming agent. The crosslinking agent is 0.5 phr of a peroxide crosslinking agent. The acid resin is reacted with the metallic stearate to form 2.58 parts by weight of the stearic acid.

The experimental group 4: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 17.2 parts by weight of ethylene/methacrylic acid copolymer resin (EMAA). The metallic stearate is 2.8 parts by weight of sodium stearate (NaSt). The foaming agent is 12.1 phr of an azo foaming agent. The crosslinking agent is 0.5 phr of a peroxide crosslinking agent. The acid resin is reacted with the metallic stearate to form 2.56 parts by weight of the stearic acid.

The experimental group 5: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 17.2 parts by weight of ethylene/methacrylic acid copolymer resin (EMAA). The metallic stearate is 2.8 parts by weight of zinc stearate (ZnSt₂). The foaming agent is 12.1 phr of an azo foaming agent. The crosslinking agent is 0.5 phr of a peroxide crosslinking agent. The acid resin is reacted with the metallic stearate to form 2.55 parts by weight of the stearic acid.

In the current experiment, both the chemical foaming blend of the control group and the chemical foaming blend of each of the experimental groups 1~5 have an addition of zinc oxide equal to 2 phr and an addition of the anti-shrinking agent equal to 3 phr. Each of the experimental groups 1~5 does not include a separate addition of the stearic acid. The composition and the content of the control group and each of the experimental groups 1~5 are shown in Table 1.

**Table 1: the composition of the chemical foaming blend of the control group and the experimental groups 1~5**

| Item | Contr ol group | Experi mental group 1 | Experim ental group 2 | Experim ental group 3 | Experim ental group 4 | Experim ental group 5 |
|---|---|---|---|---|---|---|
| Metallic stearate type | None | MgSt₂ | CaSt₂ | LiSt | NaSt | ZnSt₂ |
| Metallic stearate content (phr) | 0 | 2.7 | 2.7 | 2.6 | 2.8 | 2.8 |
| Acid resin type | EMAA | EMAA | EMAA | EMAA | EMAA | EMAA |
| Acid resin content (phr) | 20 | 17.3 | 17.3 | 17.4 | 17.2 | 17.2 |
| EVA content | 80 | 80 | 80 | 80 | 80 | 80 |
| Anti-shrinkin g agent (phr) | 3 | 3 | 3 | 3 | 3 | 3 |
| Stearic acid addition (phr) | 1 | 0 | 0 | 0 | 0 | 0 |
| Zinc oxide content (phr) | 2 | 2 | 2 | 2 | 2 | 2 |
| Peroxide crosslin king agent (phr) | 0.6 | 0.5 | 0.5 | 0.5 | 0.5 | 0.5 |
| Azo foaming agent (phr) | 13.5 | 12.6 | 12.6 | 11.6 | 12.1 | 12.1 |
| Content of the stearic acid formed through a reaction (phr) | 0 | 2.57 | 2.56 | 2.58 | 2.56 | 2.55 |

It could be seen from the composition of the chemical foaming blend in Table 1 that the experimental groups 1~5 make use of different types of metallic stearates to knead with ethylene/methacrylic acid copolymer resin (EMAA). Each of the metallic stearates could react with ethylene/methacrylic acid copolymer resin (EMAA) to form the stearic acid, indicating that ethylene/methacrylic acid copolymer resin (EMAA) of the chemical foaming blend of each of the experimental groups 1~5 reacts with the metallic stearate of each of the experimental groups 1~5 to form the ionomer. The chemical foaming blend of the control group does not include the metallic stearate during kneading, so that the chemical foaming blend of the control group does not include the stearic acid and the ionomer which are formed by the acid resin reacting with the metallic stearate.

(2) Examine the mechanical properties of the foamed shoe product manufactured from the control group and the experimental groups 1~5:
In the current experiment, the chemical foaming blend of the control group and the chemical foaming blend of each of the experimental groups 1~5 are respectively used in the method of manufacturing the foamed component product by using the chemical foaming blend in the aforementioned embodiment to manufacture the foamed shoe product. A condition for cooling and shrinking of the setting environment of the foamed shoe product of the control group and the foamed shoe product of each of the experimental groups 1~5 is between 45°C and 40°C. A total time for cooling and shrinking is 20 minutes. The foamed shoe product of the control group and the foamed shoe product of each of the experimental groups 1~5 are set to have a foam density of 0.12±0.02 g/cm³ and a hardness (Shore C) of 45±3C. The foamed shoe product of the control group and the foamed shoe product of each of the experimental groups 1~5 are subjected to mechanical property tests related to foamed midsoles/foamed outsoles, including hardness (Shore C) test, resilience test, compression set test, density test, tear strength test, split tear strength test, tensile strength test, and elongation test. Results of the mechanical property tests of the foamed shoe product of the control group and the mechanical properties of the foamed shoe product of each of the experimental groups 1~5 are listed in Table 2.

**Table 2: the mechanical properties of the foamed shoe product of the control group and the mechanical properties of the foamed shoe product of each of the experimental groups 1~5**

| Item | Cont rol grou p | Experim ental group 1 | Experim ental group 2 | Experim ental group 3 | Experim ental group 4 | Experim ental group 5 |
|---|---|---|---|---|---|---|
| Hardnes s (Shore C) | 47.0 | 46.5 | 48.0 | 47.0 | 47.0 | 46.0 |
| Resilien ce (%) | 53.0 | 52.0 | 47.0 | 50.5 | 49.0 | 46.0 |
| Compres sion set (%) | 55 | 59.5 | 56.6 | 69.4 | 66.6 | 54.8 |
| Density (g/cm³) | 0.114 | 0.110 | 0.114 | 0.121 | 0.110 | 0.110 |
| Tear strength (N/mm) | 1.7 | 2.5 | 2.2 | 2.3 | 1.7 | 1.9 |
| Split tear strength (N/cm) | 15.2 | 20.2 | 21.8 | 20.5 | 16.1 | 19.3 |
| Tensile strength (Mpa) | 2.2 | 2.0 | 2.0 | 2.3 | 2.2 | 2.2 |
| Elongati on (%) | 286.7 | 235.1 | 224.0 | 213.3 | 192.6 | 223.1 |

It could be seen from Table 2 that the foamed shoe product of the control group and the foamed shoe product of each of the experimental groups 1~5 could complete the shrinkage and setting process in the setting environment with the temperature between 45°C and 40°C. The foamed shoe product of the control group and the foamed shoe product of each of the experimental groups 1~5 has a density of 0.12±0.02 g/cm³ and a hardness (Shore C) 45±3C, indicating that the stearic acid in the foamed shoe product of each of the experimental groups 1~5 formed through the reaction between the metallic stearate and the ethylene/methacrylic acid copolymer resin (EMAA) could act as the phase change material, thereby reducing the time for cooling and shrinking of the foamed shoe product and providing weight reduction to the foamed shoe product. Moreover, a tear strength (N/mm) and a split tear strength (N/cm) of each of the experimental groups 1~5 tested are not less than a tear strength (N/mm) and a split tear strength (N/cm) of the control group tested, and an elongation of the experimental group 1 is significantly greater than an elongation of each of the experimental groups 2~5, indicating that the ionomer of the chemical foaming blend of each of the experimental groups 1~5 formed by the reaction between ethylene/methacrylic acid copolymer resin (EMAA) and the metallic stearate could enhance the tear strength (N/mm) and the split tear strength (N/cm) of the foamed shoe product, and the ionomer of the experimental group 1 formed through a reaction between magnesium stearate and the acid resin could make the foamed shoe product more resilient.

2. Determine how different contents of the metallic stearate in different experimental groups correspond to mechanical properties of the foamed shoe products:
(1) Prepare chemical foaming blends of experimental groups 6~12:

The experimental group 6: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 18.3 parts by weight of ethylene/methacrylic acid copolymer resin (EMAA). The metallic stearate is 1.7 parts by weight of magnesium stearate (MgSt₂). The foaming agent is 11.2 phr of an azo foaming agent. The crosslinking agent is 0.5 phr of a peroxide crosslinking agent. The acid resin is reacted with the metallic stearate to form 1.63 parts by weight of the stearic acid.

The experimental group 7: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 16.4 parts by weight of ethylene/methacrylic acid copolymer resin (EMAA). The metallic stearate is 3.6 parts by weight of magnesium stearate (MgSt₂). The foaming agent is 12.1 phr of an azo foaming agent. The crosslinking agent is 0.55 phr of a peroxide crosslinking agent. The acid resin is reacted with the metallic stearate to form 3.42 parts by weight of the stearic acid.

The experimental group 8: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 18.2 parts by weight of ethylene/methacrylic acid copolymer resin (EMAA). The metallic stearate is 1.8 of sodium stearate (NaSt). The foaming agent is 12.1 phr of an azo foaming agent. The crosslinking agent is 0.55 phr of a peroxide crosslinking agent. The acid resin is reacted with the metallic stearate to form 1.63 parts by weight of the stearic acid.

The experimental group 9: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 16.3 parts by weight of ethylene/methacrylic acid copolymer resin (EMAA). The metallic stearate is 3.7 parts by weight of sodium stearate (NaSt). The foaming agent is 12.1 phr of an azo foaming agent. The crosslinking agent is 0.55 phr of a peroxide crosslinking agent. The acid resin is reacted with the metallic stearate to form 3.4 parts by weight of the stearic acid.

The experimental group 10: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 17.3 parts by weight of ethylene/methacrylic acid copolymer resin (EMAA). The metallic stearate is a combination of 1.3 parts by weight of magnesium stearate (MgSt₂) and 1.4 parts by weight of sodium stearate (NaSt). The foaming agent is 11.3 phr of an azo foaming agent. The crosslinking agent is 0.5 phr of a peroxide crosslinking agent. The acid resin is reacted with the metallic stearate to form 2.57 parts by weight of the stearic acid.

The experimental group 11: the thermoplastic material, the acid resin, the metallic stearate, the foaming agent, the crosslinking agent, zinc oxide, and an anti-shrinking agent are kneaded to form chemical foaming blend. The thermoplastic material is 80 parts by weight of ethylene-vinyl acetate copolymer (EVA). The acid resin is 17.8 parts by weight of ethylene/methacrylic acid copolymer resin (EMAA). The metallic stearate is a combination of 1.3 parts by weight of magnesium stearate (MgSt₂) and 0.9 parts by weight of sodium stearate (NaSt). The foaming agent is 11.6 phr of an azo foaming agent. The crosslinking agent is 0.55 phr of a peroxide crosslinking agent. The acid resin is reacted with the metallic stearate to forma 2.11 parts by weight of the stearic acid.

The experimental group 12: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 17.3 parts by weight of ethylene/methacrylic acid copolymer resin (EMAA). The metallic stearate is a combination of 1.3 parts by weight of magnesium stearate (MgSt₂) and 1.4 parts by weight of zinc stearate (ZnSt₂). The foaming agent is 11 phr of an azo foaming agent. The crosslinking agent is 0.5 phr of a peroxide crosslinking agent. The acid resin is reacted with the metallic stearate to form 2.57 parts by weight of the stearic acid.

In the current experiment, the chemical foaming blend of each of the experimental groups 6~12 have an addition of zinc oxide equal to 2 phr and an addition of the anti-shrinking agent equal to 3 phr. Each of the experimental groups 6~12 does not include a separate addition of the stearic acid. The composition and the content of each of the experimental groups 6~12 are shown in Table 3.

**Table 3: the composition of the chemical foaming blend of the experimental groups 6~12**

| Item | Experi mental group 6 | Experi mental group 7 | Experi mental group 8 | Experi mental group 9 | Experi mental group 10 | Experi mental group 11 | Experi mental group 12 |
|---|---|---|---|---|---|---|---|
| Metall ic stearat e type | MgSt₂ | MgSt₂ | NaSt | NaSt | MgSt₂/Na St | MgSt₂/Na St | MgSt₂/Zn St₂ |
| Metall ic stearat e conten t (phr) | 1.7 | 3.6 | 1.8 | 3.7 | 1.3/1.4 | 1.3/0.9 | 1.3/1.4 |
| Acid resin type | EMAA | EMAA | EMAA | EMAA | EMAA | EMAA | EMAA |
| Acid resin conten t (phr) | 18.3 | 16.4 | 18.2 | 16.3 | 17.3 | 17.8 | 17.3 |
| EVA conten t (phr) | 80 | 80 | 80 | 80 | 80 | 80 | 80 |
| Anti-shrink ing agent (phr) | 3 | 3 | 3 | 3 | 3 | 3 | 3 |
| Steari c acid additi on (phr) | 0 | 0 | 0 | 0 | 0 | 0 | 0 |
| Zinc oxide conten t (phr) | 2 | 2 | 2 | 2 | 2 | 2 | 2 |
| Peroxi de crossli nking agent (phr) | 0.5 | 0.55 | 0.55 | 0.55 | 0.5 | 0.55 | 0.5 |
| Azo foamin g agent (phr) | 11.2 | 12.1 | 12.1 | 12.1 | 11.3 | 11.6 | 11 |
| Conte nt of the stearic acid forme d throug h a reacti on (phr) | 1.63 | 3.42 | 1.63 | 3.4 | 2.57 | 2.11 | 2.57 |

It could be seen from the composition of the chemical foaming blend in Table 3 that the experimental groups 6~12 make use the metallic stearate in different contents to knead with ethylene/methacrylic acid copolymer resin (EMAA) or the combination of two metallic stearates to knead with ethylene/methacrylic acid copolymer resin (EMAA). The metallic stearate of each of the experimental groups 6~12 could be reacted with ethylene/methacrylic acid copolymer resin (EMAA) to form the stearic acid, indicating that ethylene/methacrylic acid copolymer resin (EMAA) of the chemical foaming blend of each of the experimental groups 6~12 reacts with the corresponding metallic stearate to form the ionomer.

(2) Examine the mechanical properties of the foamed shoe product manufactured from the experimental group 6~12:
In the current experiment, the chemical foaming blend of each of the experimental groups 6~12 is used in the method of manufacturing the foamed component product by using the chemical foaming blend in the aforementioned embodiment to manufacture the foamed shoe product. A condition for cooling and shrinking of the setting environment of the foamed shoe product of each of the experimental groups 6~12 is between 45°C and 40°C. A total time for cooling and shrinking is 20 minutes. The foamed shoe product of each of the experimental groups 6~12 is set to have a foam density of 0. 12±0.02 g/cm³. The foamed shoe product of each of the experimental groups 6~12 is subjected to mechanical property tests related to foamed midsoles/foamed outsoles, including hardness (Shore C) test, resilience test, compression set test, density test, tear strength test, split tear strength test, tensile strength test, and elongation test. Results of the mechanical property tests of the foamed shoe product of each of the experimental groups 6~12 are listed in Table 4.

**Table 4: the mechanical properties of the foamed shoe product of each of the experimental groups 6~12**

| Item | Experi mental group 6 | Experi mental group 7 | Experi mental group 8 | Experi mental group 9 | Experi mental group 10 | Experi mental group 11 | Experi mental group 12 |
|---|---|---|---|---|---|---|---|
| Hardne ss (Shore C) | 51 | 50.5 | 49.0 | 50.0 | 45.0 | 46.5 | 47.0 |
| Resilie nce (%) | 50.0 | 51.3 | 49.7 | 46.7 | 50.7 | 53.3 | 51.5 |
| Compr ession set (%) | 53.5 | 57.9 | 59.7 | 57.3 | 59.9 | 55.6 | 54.2 |
| Densit y (g/cm3 ) | 0.130 | 0.123 | 0.117 | 0.116 | 0.114 | 0.126 | 0.127 |
| Tear strengt h (N/mm ) | 2.1 | 1.9 | 2.0 | 1.6 | 2.3 | 2.0 | 2.3 |
| Split tear strengt h (N/cm) | 20.8 | 18.3 | 19.0 | 14.6 | 17.6 | 18.4 | 21.4 |
| Tensil e strengt h (Mpa) | 2.6 | 2.4 | 2.4 | 2.2 | 2.0 | 2.3 | 2.3 |
| Elonga tion (%) | 230.2 | 198.9 | 183.5 | 176.5 | 215.5 | 229.2 | 267.3 |

It could be seen from Table 4 that the foamed shoe product of each of the experimental groups 6~12 could complete the shrinkage and setting process in the setting environment with the temperature between 45°C and 40°C. The foamed shoe product of each of the experimental groups 6~12 has a density of 0.12±0.02 g/cm³. A tear strength (N/mm) and a split tear strength (N/cm) of each of the experimental groups 6~8 and 10~12 tested are greater than the tear strength (N/mm) and the split tear strength (N/cm) of the control group tested, and an elongation of the experimental group 12 is greater than an elongation of each of the experimental groups 6~11, indicating that the ionomer formed through the reaction between the metallic stearate, which is selected from magnesium stearate, sodium stearate, the combination of magnesium stearate and sodium stearate, and the combination of magnesium stearate and zinc stearate, and ethylene/methacrylic acid copolymer resin (EMAA), could enhance the physical strength of the foamed shoe product. Moreover, the experimental group 12 makes use of the combination of magnesium stearate and zinc stearate and the acid resin to form the ionomer through the reaction, thereby further enhancing the physical strength of the foamed shoe product and maintaining a good resilience of the foamed shoe product. A tear strength (N/mm) and a split tear strength (N/cm) of the experimental group 9 tested are less than the tear strength (N/mm) and the split tear strength (N/cm) of the control group, indicating that the increase in the content of sodium stearate in the experimental group 9 relatively reduces the physical strength of the foamed shoe product.

3. Determine how different acid resins in different experimental groups correspond to mechanical properties of the foamed shoe products:
(1) Prepare chemical foaming blends of experimental groups 13~17:
   The experimental group 13: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 17.3 parts by weight of ethylene/methacrylic acid copolymer resin (EMAA). The metallic stearate is 2.7 parts by weight of magnesium stearate (MgSt₂). The foaming agent is 11.7 phr of an azo foaming agent. The crosslinking agent is 0.55 phr of a peroxide crosslinking agent. The acid resin is reacted with the metallic stearate to form 2.57 parts by weight of the stearic acid.

The experimental group 14: the thermoplastic material, the acid resin, the metallic stearate, the foaming agent, the crosslinking agent, zinc oxide, and an anti-shrinking agent are kneaded to form the chemical foaming blend. The thermoplastic material is 86 parts by weight of ethylene-vinyl acetate copolymer (EVA). The acid resin is 11.3 parts by weight of ethylene acrylic acid copolymer resin (EAA). The metallic stearate is 2.7 parts by weight of magnesium stearate (MgSt₂). The foaming agent is 11 phr of an azo foaming agent. The crosslinking agent is 0.65 phr of a peroxide crosslinking agent. The acid resin is reacted with the metallic stearate to form 2.64 parts by weight of the stearic acid.

The experimental group 15: the thermoplastic material, the acid resin, the metallic stearate, the foaming agent, the crosslinking agent, zinc oxide, and an anti-shrinking agent are kneaded to form the chemical foaming blend. The thermoplastic material is 80 parts by weight of ethylene-vinyl acetate copolymer (EVA). The acid resin is 18.7 parts by weight of ethylene vinyl acetate copolymers grafted with maleic anhydride (EVA-MAH). The metallic stearate is 1.3 parts by weight of magnesium stearate (MgSt₂). The foaming agent is 12.2 phr of an azo foaming agent. The crosslinking agent is 0.5 phr of a peroxide crosslinking agent. The acid resin is reacted with the metallic stearate to form 1.25 parts by weight of the stearic acid.

The experimental group 16: the thermoplastic material, the acid resin, the metallic stearate, the foaming agent, the crosslinking agent, zinc oxide, and an anti-shrinking agent are kneaded to form the chemical foaming blend. The thermoplastic material is 70 parts by weight of ethylene-vinyl acetate copolymer (EVA). The acid resin is 27 parts by weight of ethylene propylene diene monomer grafted with maleic anhydride (EPDM-MAH). The metallic stearate is 3.0 parts by weight of magnesium stearate (MgSt₂). The foaming agent is 13.8 phr of an azo foaming agent. The crosslinking agent is 0.6 phr of a peroxide crosslinking agent. The acid resin is reacted with the metallic stearate to form 1.28 parts by weight of the stearic acid.

The experimental group 17: the thermoplastic material, the acid resin, the metallic stearate, the foaming agent, the crosslinking agent, zinc oxide, and an anti-shrinking agent are kneaded to form the chemical foaming blend. The thermoplastic material is 86 parts by weight of ethylene-vinyl acetate copolymer (EVA). The acid resin is a combination of 17.3 parts by weight of ethylene/methacrylic acid copolymer resin (EMAA) and 9.35 parts by weight of ethylene vinyl acetate copolymers grafted with maleic anhydride (EVA-MAH). The metallic stearate is 3.35 parts by weight of magnesium stearate (MgSt₂). The foaming agent is 12 phr of an azo foaming agent. The crosslinking agent is 0.55 phr of a peroxide crosslinking agent. The acid resin is reacted with the metallic stearate to form 3.2 parts by weight of the stearic acid.

In the current experiment, the chemical foaming blend of each of the experimental groups 13~17 has an addition of zinc oxide equal to 2 phr and an addition of the anti-shrinking agent equal to 3 phr. Each of the experimental groups 13~17 does not include a separate addition of the stearic acid. The composition and the content of each of the experimental groups 13~17 are shown in Table 5.

**Table 5: the composition of the chemical foaming blend of the experimental groups 13~17**

| Item | Experime ntal group 13 | Experime ntal group 14 | Experime ntal group 15 | Experime ntal group 16 | Experime ntal group 17 |
|---|---|---|---|---|---|
| Metallic stearate type | MgSt₂ | MgSt₂ | MgSt₂ | MgSt₂ | MgSt₂ |
| Metallic stearate content (phr) | 2.7 | 2.7 | 1.3 | 3.0 | 3.35 |
| Acid resin type | EMAA | EAA | EVA-MAH | EPDM-MAH | EMAA/ EVA-MAH |
| Acid resin content (phr) | 17.3 | 11.3 | 18.7 | 27 | 17.3/9.35 |
| EVA Content (phr) | 80 | 86 | 80 | 70 | 86 |
| Anti-shrinking agent (phr) | 3 | 3 | 3 | 3 | 3 |
| Stearic acid addition (phr) | 0 | 0 | 0 | 0 | 0 |
| Zinc oxide content (phr) | 2 | 2 | 2 | 2 | 2 |
| Peroxide crosslink ing agent (phr) | 0.55 | 0.65 | 0.5 | 0.6 | 0.55 |
| Azo foaming agent (phr) | 11.7 | 11 | 12.2 | 13.8 | 12.0 |
| Content of the stearic acid formed through a reaction (phr) | 2.57 | 2.64 | 1.25 | 1.28 | 3.2 |

It could be seen from the composition of the chemical foaming blend in Table 5 that the experimental groups 13~17 make use of different types of acid resins to knead with a correspondingly adjusted content of magnesium stearate (MgSt₂). Magnesium stearate of the experimental groups 13~17 could be reacted with different types of the acid resin to form the stearic acid, indicating that the acid resin of the chemical foaming blend of each of the experimental groups 13~17 reacts with magnesium stearate to form the ionomer.

(2) Examine the mechanical properties of the foamed shoe product manufactured from the experimental groups 13~17:
In the current experiment, the chemical foaming blend of each of the experimental groups 13~17 is used in the method of manufacturing the foamed component product by using the chemical foaming blend in the aforementioned embodiment to manufacture the foamed shoe product. A condition for cooling and shrinking of the setting environment of the foamed shoe product of each of the experimental groups 13~17 is between 45°C and 40°C. A total time for cooling and shrinking is 20 minutes. The foamed shoe product of each of the experimental groups 13~17 is set to have a foam density of 0.12±0.02 g/cm³. The foamed shoe product of each of the experimental groups 13~17 is subjected to mechanical property tests related to foamed midsoles/foamed outsoles, including hardness (Shore C) test, resilience test, compression set test, density test, tear strength test, split tear strength test, tensile strength test, and elongation test. Results of the mechanical property tests of the foamed shoe product of each of the experimental groups 13~17 are listed in Table 6.

**Table 6: the mechanical properties of the foamed shoe product of each of the experimental groups 13~17**

| Item | Experime ntal group 13 | Experime ntal group 14 | Experime ntal group 15 | Experime ntal group 16 | Experime ntal group 17 |
|---|---|---|---|---|---|
| Hardness (Shore C) | 44.0 | 48.0 | 38.5 | 37.0 | 51.0 |
| Resilienc e (%) | 52.4 | 55.9 | 51.5 | 58 | 47.5 |
| Compress ion set (%) | 67.7 | 53.6 | 57.3 | 42.1 | 62.9 |
| Density (g/cm3) | 0.114 | 0.140 | 0.119 | 0.124 | 0.115 |
| Tear strength (N/mm) | 2.3 | 2.5 | 2.2 | 1.5 | 2.1 |
| Split tear strength (N/cm) | 22.8 | 21.8 | 19.0 | 12.4 | 20.0 |
| Tensile strength (Mpa) | 2.1 | 2.3 | 1.7 | 2.0 | 2.4 |
| Elongatio n (%) | 271.9 | 239.4 | 234.8 | 224.5 | 210.6 |

It could be seen from Table 6 that the foamed shoe product of each of the experimental groups 13~17 could complete the shrinkage and setting process in the setting environment with the temperature between 45°C and 40°C. The foamed shoe product of each of the experimental groups 13~17 has a density of 0.12±0.02 g/cm³. A tear strength (N/mm) and a split tear strength (N/cm) of the experimental groups 13~15 and 17 tested are greater than the tear strength (N/mm) and the split tear strength (N/cm) of the control group tested, wherein the tear strength (N/mm) and the split tear strength (N/cm) of the experimental groups 13 and 14 are better. An elongation of the experimental group 13 tested is greater than an elongation of each of the experimental groups 14~17. The ionomer formed the reaction between the acid resin of the experimental group 13 and 14, which is ethylene/methacrylic acid copolymer resin (EMAA) or ethylene acrylic acid copolymer resin (EAA), and magnesium stearate could enhance the physical strength of the foamed shoe product, and the foamed shoe product of the experimental group 13 is more resilient.

4. Determine how different contents of the metallic stearate in different experimental groups and different combinations of the thermoplastic material correspond to mechanical properties of the foamed shoe products:
(1) Prepare chemical foaming blends of experimental groups 18~22:
   The experimental group 18: the thermoplastic material, the acid resin, the metallic stearate, the foaming agent, the crosslinking agent, zinc oxide, and an anti-shrinking agent are kneaded to form the chemical foaming blend. The thermoplastic material is 60 parts by weight of ethylene-vinyl acetate copolymer (EVA) and 20 parts by weight of thermoplastic polyolefin elastomer (TPO). The acid resin is 17.3 parts by weight of ethylene/methacrylic acid copolymer resin (EMAA). The metallic stearate is 2.7 parts by weight of magnesium stearate (MgSt₂). The foaming agent is 11.4 phr of an azo foaming agent. The crosslinking agent is 0.55 phr of a peroxide crosslinking agent. The acid resin is reacted with the metallic stearate to form 2.57 parts by weight of the stearic acid.

The experimental group 19: the thermoplastic material, the acid resin, the metallic stearate, the foaming agent, the crosslinking agent, zinc oxide, and an anti-shrinking agent are kneaded to form the chemical foaming blend. The thermoplastic material is 65 parts by weight of ethylene-vinyl acetate copolymer (EVA) and 20 wight parts of thermoplastic polyolefin elastomer (TPO). The acid resin is 13.0 parts by weight of ethylene/methacrylic acid copolymer resin (EMAA). The metallic stearate is 2.0 parts by weight of magnesium stearate (MgSt₂). The foaming agent is 11.6 phr of an azo foaming agent. The crosslinking agent is 0.6 phr of a peroxide crosslinking agent. The acid resin is reacted with the metallic stearate to form 1.93 parts by weight of the stearic acid.

The experimental group 20: the thermoplastic material, the acid resin, the metallic stearate, the foaming agent, the crosslinking agent, zinc oxide, and an anti-shrinking agent are kneaded to form the chemical foaming blend. The thermoplastic material is 66 parts by weight of ethylene-vinyl acetate copolymer (EVA) and 20 parts by weight of thermoplastic polyolefin elastomer (TPO). The acid resin is 11.3 parts by weight of ethylene acrylic acid copolymer resin (EAA). The metallic stearate is 2.7 parts by weight of magnesium stearate (MgSt₂). The foaming agent is 12 phr of an azo foaming agent. The crosslinking agent is 0.65 phr of a peroxide crosslinking agent. The acid resin is reacted with the metallic stearate to form 2.64 parts by weight of the stearic acid.

The experimental group 21: the thermoplastic material, the acid resin, the metallic stearate, the foaming agent, the crosslinking agent, zinc oxide, and an anti-shrinking agent are kneaded to form the chemical foaming blend. The thermoplastic material is 45 parts by weight of ethylene-vinyl acetate copolymer (EVA), 10 parts by weight of thermoplastic polyolefin elastomer (TPO), 15 parts by weight of styrene ethylene/butylene styrene copolymer (SEBS), and 15 parts by weight of styrenic block copolymer (SBC). The acid resin is 13.5 parts by weight of ethylene propylene diene monomer grafted with maleic anhydride (EPDM-MAH). The metallic stearate is 1.5 parts by weight of magnesium stearate (MgSt₂). The foaming agent is 14.4 phr of an azo foaming agent. The crosslinking agent is 0.6 phr of a peroxide crosslinking agent. The acid resin is reacted with the metallic stearate to form 0.64 parts by weight of the stearic acid.

The experimental group 22: the thermoplastic material, the acid resin, the metallic stearate, the foaming agent, the crosslinking agent, zinc oxide, and an anti-shrinking agent are kneaded to form the chemical foaming blend. The thermoplastic material is 50 parts by weight of ethylene-vinyl acetate copolymer (EVA) and 20 parts by weight of thermoplastic polyolefin elastomer (TPO). The acid resin is 26 parts by weight of ethylene/methacrylic acid copolymer resin (EMAA). The metallic stearate is 4.0 parts by weight of magnesium stearate (MgSt₂). The foaming agent is 16 phr of an azo foaming agent. The crosslinking agent is 0.65 phr of a peroxide crosslinking agent. The acid resin is reacted with the metallic stearate to form 3.86 parts by weight of the stearic acid.

In the current experiment, the chemical foaming blend of each of the experimental groups 18~22 has an addition of zinc oxide equal to 2 phr and an addition of the anti-shrinking agent equal to 3 phr. Each of the experimental groups 18~22 does not include a separate addition of the stearic acid. The composition and the content of each of the experimental groups 18~22 are shown in Table 7.

**Table 7: the composition of the chemical foaming blend of the experimental groups 18~22**

| Item | Experime ntal group 18 | Experime ntal group 19 | Experime ntal group 20 | Experime ntal group 21 | Experime ntal group 22 |
|---|---|---|---|---|---|
| Metallic stearate type | MgSt₂ | MgSt₂ | MgSt₂ | MgSt₂ | MgSt₂ |
| Metallic stearate content (phr) | 2.7 | 2.0 | 2.7 | 1.5 | 4 |
| Acid resin type | EMAA | EMAA | EAA | EPDM-MAH | EMAA |
| Acid resin content (phr) | 17.3 | 13.0 | 11.3 | 13.5 | 26 |
| EVA content (phr) | 60 | 65 | 66 | 45 | 50 |
| Content of other resins (phr) | 20 | 20 | 20 | 40 | 20 |
| Anti-shrinking agent (phr) | 3 | 3 | 3 | 3 | 3 |
| Stearic acid addition (phr) | 0 | 0 | 0 | 0 | 0 |
| Zinc oxide content (phr) | 2 | 2 | 2 | 2 | 2 |
| Peroxide crosslink ing agent (phr) | 0.55 | 0.6 | 0.65 | 0.6 | 0.65 |
| Azo foaming agent (phr) | 11.4 | 11.6 | 12 | 14.4 | 16 |
| Content of the stearic acid formed through a reaction (phr) | 2.57 | 1.93 | 2.64 | 0.64 | 3.86 |

It could be seen from the composition of the chemical foaming blend in Table 7 that the experimental groups 18~22 make use of different types of the acid resin to knead with a correspondingly adjusted content of magnesium stearate (MgSt₂). In the experimental groups 18~22, at least one of thermoplastic polyolefin elastomer (TPO), styrene ethylene/butylene styrene copolymer (SEBS), and styrenic block copolymer (SBC) is mixed with ethylene-vinyl acetate copolymer (EVA). The metallic stearate of the experimental groups 18~22 could be reacted with the acid resin to form the stearic acid, indicating that the acid resin of the chemical foaming blend of each of the experimental groups 18~22 reacts with the metallic stearate to form the ionomer.

(2) Examine the mechanical properties of the foamed shoe product manufactured from the experimental groups 18~22:
In the current experiment, the chemical foaming blend of each of the experimental groups 18~22 chemical foaming blend is used in the method of manufacturing the foamed component product by using the chemical foaming blend in the aforementioned embodiment to manufacture the foamed shoe product. A condition for cooling and shrinking of the setting environment of the foamed shoe product of each of the experimental groups 18~22 is between 45°C and 40°C. A total time for cooling and shrinking is 20 minutes. The foamed shoe product of each of the experimental groups 18~22 is subjected to mechanical property tests related to foamed midsoles/foamed outsoles, including hardness (Shore C) test, resilience test, compression set test, density test, tear strength test, split tear strength test, tensile strength test, and elongation test. Results of the mechanical property tests of the foamed shoe product of each of the experimental groups 18~22 are listed in Table 8.

**Table 8: the mechanical properties of the foamed shoe product of each of the experimental groups 18~22:**

| Item | Experime ntal group 18 | Experime ntal group 19 | Experime ntal group 20 | Experime ntal group 21 | Experime ntal group 22 |
|---|---|---|---|---|---|
| Hardness (Shore C) | 43.0 | 40.5 | 43.5 | 34.0 | 42.5 |
| Resilienc e (%) | 55.6 | 56.0 | 55.5 | 64.3 | 54.2 |
| Compress ion set (%) | 59.2 | 57.6 | 58.3 | 37.3 | 66.1 |
| Density (g/cm3) | 0.123 | 0.127 | 0.121 | 0.134 | 0.092 |
| Tear strength (N/mm) | 2.1 | 2.3 | 2.6 | 1.4 | 1.5 |
| Split tear strength (N/cm) | 18.7 | 19.2 | 18.7 | 10.7 | 15.6 |
| Tensile strength (Mpa) | 2.3 | 2.1 | 2.0 | 2.2 | 1.6 |
| Elongatio n (%) | 262.9 | 267.0 | 256.6 | 245.9 | 218.1 |

It could be seen from Table 8 that the foamed shoe product of each of the experimental groups 18~22 could complete the shrinkage in the setting environment with the temperature between 45°C and 40°C. The foamed shoe product of each of the experimental groups 18~22 has a density of 0.09~0.15 g/cm³. A tear strength (N/mm) and a split tear strength (N/cm) of each of the experimental groups 18~20 tested is greater than the tear strength (N/mm) and the split tear strength (N/cm) of the control group tested, and an elongation of each of the experimental groups 18~20 tested is greater than an elongation of each of the experimental groups 21 and 22, indicating that when ethylene-vinyl acetate copolymer (EVA) of the chemical foaming blend is added with other thermoplastic resins, the physical strength of the foamed shoe product is not affected. In the experimental groups 18~20, when the acid resin is ethylene/methacrylic acid copolymer resin (EMAA) and ethylene acrylic acid copolymer resin (EAA) and the content of magnesium stearate is between 2 parts by weight and 2.7 parts by weight, the physical strength of the foamed shoe product could be enhanced and the foamed shoe product could be more resilient.

The aforementioned experiments are summarized as below. In the chemical foaming blends of the experimental groups 1~22, when different types of the acid resin are kneaded with different types of the metallic stearate and the content of the acid resin and the content of the metallic stearate are adaptively adjusted, the acid resin and the metallic stearate could be reacted with each other to form the ionomer and the phase change material simultaneously. The results of the mechanical property tests of the foamed shoe product of the experimental groups 1~22 show that the ionomer formed through the reaction between the acid resin and the metallic stearate could make foamed shoe product have a low density and a light weight, and the tear strength (N/mm) and the split tear strength (N/cm) of the foamed shoe product could be enhanced and the foamed shoe product could be resilient. Moreover, the stearic acid formed through the reaction between the metallic stearate and the acid resin of the foamed shoe product acts as the phase change material, so that the time for cooling and setting of the foamed shoe product could be reduced.

## Claims

1. A chemical foaming blend including a phase change material formed through a reaction, configured to foam and manufacture a foamed component product, wherein the foamed component product is configured to constitute a part of a sporting good; the chemical foaming blend comprising:
a thermoplastic material;
a phase change material, mixed with the thermoplastic material, wherein the phase change material is a stearic acid formed through a reaction between a metallic stearate and an acid resin;
an ionomer, mixed with the thermoplastic material, wherein the ionomer is formed through reacting the acid resin with the metallic stearate;
a foaming agent, mixed with the thermoplastic material, the phase change material, and the ionomer; and
a crosslinking agent, mixed with the thermoplastic material, the phase change material, and the ionomer;
wherein the foamed component product has a specific gravity ranging from 0.05 g/cm³ to 0.20 g/cm³ and a hardness (Shore C) ranging from 25 to 60.

2. The chemical foaming blend as claimed in claim 1, wherein the thermoplastic material, the phase change material, and the ionomer form an ionomer mixture; a content of the thermoplastic material is quantified in terms of weight; the content of the thermoplastic material accounts for between 60wt% and 95wt% of a total content of the ionomer mixture; a combined content of the phase change material and the ionomer is quantified in terms of weight; the combined content of the ionomer and the phase change material accounts for between 5wt% and 40wt% of the total content of the ionomer mixture.

3. The chemical foaming blend as claimed in claim 2, wherein a weight ratio of the ionomer to the phase change material is between 67:33 and 98:2.

4. The chemical foaming blend as claimed in claim 3, wherein the thermoplastic material is selected from a group consisting of polyethylene (PE), ethylene-vinyl acetate copolymer (EVA), thermoplastic polyolefin elastomer (TPO), thermoplastic styrenic copolymer elastomer (TPS), thermoplastic polyurethane elastomer (TPU), thermoplastic polyester elastomer (TPEE), thermoplastic polyamide elastomer (TPA), synthetic rubber, natural rubber, and a combination thereof; the acid resin is selected from a group consisting of ethylene/methacrylic acid copolymer resin (EMAA), ethylene acrylic acid copolymer resin (EAA), polyacrylic acid copolymer (PAA copolymer), maleic anhydride grafted polymer, and a combination thereof; a content of carboxyl groups of the acid resin or a content of anhydride groups of the acid resin is less than 20wt%.

5. The chemical foaming blend as claimed in claim 4, wherein the metallic stearate is selected from a group consisting of zinc stearate, magnesium stearate, sodium stearate, calcium stearate, lithium stearate, and a combination thereof.

6. The chemical foaming blend as claimed in claim 1 or 2, wherein an amount of the crosslinking agent added is between 0.3 phr and 1.2 phr; the amount of the crosslinking agent added is based on a total content of the thermoplastic material, the phase change material, and the ionomer; an amount of the foaming agent added is between 2 phr and 25 phr; the amount of the foaming agent added is based on the total content of the thermoplastic material, the phase change material, and the ionomer.

7. A method of manufacturing a foamed component product by using a chemical foaming blend including a phase change material formed through a reaction, comprising:
step S1: kneading a thermoplastic material, an acid resin, a metallic stearate, a foaming agent, and a crosslinking agent to form a chemical foaming blend, wherein the metallic stearate and the acid resin react to form a phase change material, which is a stearic acid; simultaneously, the acid resin and the metallic stearate react to form an ionomer, which is the acid resin having ionic bonds;
step S2: filling the chemical foaming blend into a mold and heating the chemical foaming blend for foaming and crosslinking to form a semi-finished foamed component product, wherein the phase change material stores a thermal energy while the chemical foaming blend is heated and foamed; and
step S3: opening the mold and removing the semi-finished foamed component product, and placing the semi-finished foamed component product in a setting environment, wherein a temperature of the setting environment is less than a transition temperature of the phase change material; the phase change material releases the stored thermal energy in the setting environment to shrink the semi-finished foamed component product into a foamed component product; the foamed component product is configured to constitute a part of a sporting good; the foamed component product has a specific gravity ranging from 0.05 g/cm³ to 0.20 g/cm³ and a hardness (Shore C) ranging from 25 to 60.

8. The method as claimed in claim 7, wherein in step S1, the thermoplastic material is added to a kneader and is kneaded between 60°C and 85°C; then, the metallic stearate is added to the kneader for kneading with the thermoplastic material; afterwards, the acid resin is added to the kneader for kneading for 10 minutes to 20 minutes; during kneading, a part of carboxyl groups of the acid resin or a part of anhydride groups of the acid resin is reacted with metal ions of the metallic stearate to form the phase change material and the ionomer; then, the crosslinking agent and the foaming agent are added to the kneader for kneading, thereby obtaining the chemical foaming blend.

9. The method as claimed in claim 8, wherein the thermoplastic material is selected from a group consisting of polyethylene (PE), ethylene-vinyl acetate copolymer (EVA), thermoplastic polyolefin elastomer (TPO), thermoplastic styrenic copolymer elastomer (TPS), thermoplastic polyurethane elastomer (TPU), thermoplastic polyester elastomer (TPEE), thermoplastic polyamide elastomer (TPA), synthetic rubber, natural rubber, and a combination thereof; the acid resin is selected from a group consisting of ethylene/methacrylic acid copolymer resin (EMAA), ethylene acrylic acid copolymer resin (EAA), polyacrylic acid copolymer (PAA copolymer), maleic anhydride grafted polymer, and a combination thereof; a content of the carboxyl groups of the acid resin or a content of the anhydride groups of the acid resin is less than 20wt%.

10. The method as claimed in claim 9, wherein the metallic stearate is selected from a group consisting of zinc stearate, magnesium stearate, sodium stearate, calcium stearate, lithium stearate, and a combination thereof.

11. The method as claimed in claim 8, wherein the thermoplastic material, the acid resin, and the metallic stearate constitute an acid resin mixture; a content of the thermoplastic material is quantified in terms of weight; the content of the thermoplastic material accounts for between 60wt% and 95wt% of a total content of the acid resin mixture in terms of weight; a combined content of the acid resin and the metallic stearate is quantified in terms of weight; the combined content of the acid resin and the metallic stearate accounts for between 5wt% and 40wt% of the total content of the acid resin mixture.

12. The method as claimed in claim 11, wherein a weight ratio of the acid resin to the metallic stearate is between 65:35 and 97:3.

13. The method as claimed in claim 8, wherein an amount of the crosslinking agent added is between 0.3 phr and 1.2 phr; the amount of the crosslinking agent added is based on a total content of the thermoplastic material, the acid resin, and the metallic stearate; an amount of the foaming agent added is between 2 phr and 25 phr; the amount of the foaming agent added is based on the total content of the thermoplastic material, the acid resin, and the metallic stearate.

14. The method as claimed in claim 7, wherein in step S2, when the chemical foaming blend is filled into the mold, a heating temperature of the mold ranges from 160°C to 185°C; a heating time ranges from 6 minutes to 18 minutes.

15. The method as claimed in claim 7, wherein in step S3, after the semi-finished foamed component product is removed from the mold, the semi-finished foamed component product is firstly placed in the setting environment for cooling and shrinking; a temperature of the setting environment is set to be between 30°C and 45°C; a time for cooling and shrinking is set to be between 15 minutes and 45 minutes; the phase change material in the semi-finished foamed component product releases the stored thermal energy, so that the semi-finished foamed component product is evenly shrunk after opening the mold, thereby forming the foamed component product from the semi-finished foamed component product in the setting environment.
